# EUROPEAN PATENT APPLICATION

(11) **EP 3 275 680 A1**
(43) Date of publication of application: **31.01.2018**
(21) Application number: 17181545.9
(22) Date of filing: 14.07.2017
(51) Int. Cl.: B42D 15/00, B65D 27/04

(54) **SHEET-LIKE OBJECT**

(30) Priority: 25.07.2016 JP 2016145465
(71) Applicant: Riso Kagaku Corporation, Tokyo, 108-8385 (JP)
(72) Inventor: NOGUCHI, Yoshihiro, Ibaraki, Ibaraki 305-0818 (JP)
(74) Representative: Suèr, Steven Johannes

(57) **Abstract**

An embossment formation area A is formed on one surface of envelope paper S. The embossment formation area A is left-right symmetric with respect to a centerline L including the centerline L parallel to a paper feed direction (transport direction), and is formed rearward over a predetermined length from a leading end in the paper feed direction. An embossment E has convexes that are equal in height to or higher than the thickness of transparent film Sc attached to a window Sa, that is, a thickness change portion S1. Even when many sheets of the envelope paper are stacked, the envelope paper can be fed without causing a double feed or a no-load feed.

## Description

The present invention relates to a sheet-like object that is to be placed on top of another to create a stack of sheet-like objects on a workbench, removed one sheet at a time, and transported in a transport direction.

A well-known sealed-letter preparation system prepares a sealed letter by operating a printing apparatus to make a desired print as needed on sheet-like objects such as envelope paper and contents, transporting the sheet-like objects to an enclosing/sealing apparatus disposed subsequently to the printing apparatus, folding the sheet-like objects as needed, inserting the contents into an envelope formed of the envelope paper, and sealing the envelope.

In the enclosing/sealing apparatus of this system, the envelope paper and the contents are transported to a sealer, and lateral edges of the envelope paper folded to enclose the contents are sandwiched, for example, between rollers and pressed in such a manner that pressure-sensitive adhesives applied to the lateral edges are secured to each other. Further, while the envelope paper whose lateral edges are glued together is transported, a remoistening adhesive on the envelope paper is activated by applying water to it. While the remoistening adhesive is activated, a flap portion of the envelope paper is folded to seal the envelope. In this manner, the envelope (sealed letter) is prepared.

The envelope paper used in the above system is of the same type as that is disclosed in Patent Literature 1, proposed earlier by the inventors of the present application.

Patent Literature 1: Japanese Unexamined Patent Application Publication No. 2013-49218

It is demanded that windowed envelope paper be used in the above-described system. The windowed envelope paper is used for various documents such as tax and other notices transmitted from public institutions, credit card and other billing statements, and direct mail.

The windowed envelope paper has an opening (cut) having a predetermined size. The opening is formed in a front portion of general envelope paper. A transparent film is attached to the front portion in order to form a window. Therefore, a sealed letter prepared by using the windowed envelope paper is such that information written on the contents (e.g., information about a recipient (postal code, name, and address or location), information about a sender (postal code, name, address or location, etc.), and identification information about the recipient and sender (one-dimensional code (barcode) and two-dimensional code (QR code (registered trademark) and SP code)), and management number) can be confirmed through the window without opening the envelope.

However, the windowed envelope paper is such that a transparent film is glued to cover the opening in a predetermined portion of the paper in order to create the window. Because of the transparent film, an area around the window on the paper is thicker than the remaining area.

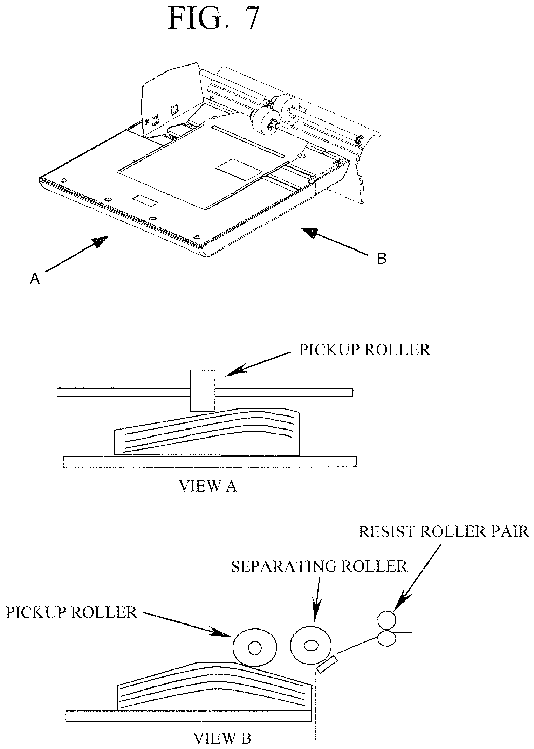

Consequently, when multiple sheets of windowed envelope paper are stacked on a paper feed table, a thickness change portion, that is, the windowed portion, bulges to create a gradual decline as indicated by view A and view B in FIG. 7. As a result, a gap arises between the paper surface of the uppermost envelope paper and the roller surface of a pickup roller. This causes a problem where a no-load feed or a double feed occurs due to poor contact with the pickup roller.

Further, when many sheets of windowed envelope paper having a window as a thickness change portion are stacked on a paper feed table, the stack of windowed envelope paper is tilted due to its window. Therefore, the stack of windowed envelope paper is likely to collapse. As a result, many sheets of windowed envelope paper cannot be stacked on the paper feed table. Consequently, when a job of preparing a large number of sealed letters is executed, complications occur because the windowed envelope paper needs to be replenished at frequent intervals.

The present invention has been made in view of the above circumstances to provide a sheet-like object that permits multiple sheets of the sheet-like object to be steadily stacked and prevents a double feed and a no-load feed.

### {Solution to Problem}

According to a first aspect of the present invention, there is provided a sheet-like object including a thickness change portion. The thickness change portion has a partially different thickness on one side of the centerline of a sheet surface that is parallel to a paper feed direction. An embossment is formed in an area that is left-right symmetric with respect to the centerline including the centerline.

According to a second aspect of the present invention, there is provided the sheet-like object as described in the first aspect, wherein the sheet-like object is transported by a paper feeder. The paper feeder includes a separating roller that receives the sheet-like object delivered by a pickup roller, separates one sheet of the sheet-like object at a time, and transports the separated sheet in a transport direction, and a resist roller pair that comes into contact with a leading end of the sheet-like object separated by the separating roller and deflects the leading end by a predetermined deflection amount to provide skew correction. The length of the area in a direction parallel to the centerline is determined by adding the deflection amount to at least the distance between the separating roller and the resist roller pair.

According to a third aspect of the present invention, there is provided the sheet-like object as described in the second aspect, wherein the length of the area in the width direction orthogonal to the centerline is equivalent to or greater than the roller width of the pickup roller or of the separating roller.

### Advantageous Effects of Invention

According to the sheet-like object as described in the first aspect, the thickness of the thickness change portion formed on the sheet surface is offset by the embossment formed in an area that is left-right symmetric with respect to the centerline including the centerline. The difference in thickness is then eliminated so that the upper surface of a stack of sheet-like objects on a table is substantially horizontal. This prevents a no-load feed and a double feed from being caused, for example, by poor contact with the roller surface of the pickup roller or separating roller, which form a primary paper feed mechanism. Further, the embossment formed in the area of the sheet-like object suppresses the tilt of the stack. Therefore, many sheets of the sheet-like object can be steadily stacked, for example, on a paper feed table of the paper feeder.

According to the sheet-like object as described in the second aspect, the length of the area in the direction along the centerline is determined by adding the deflection amount to at least the distance between the separating roller and the resist roller pair. Therefore, only the uppermost sheet of the sheet-like object can be properly transported at a time from the primary paper feed mechanism to a secondary paper feed mechanism without causing a no-load feed or a double feed.

According to the sheet-like object as described in the third aspect, the widthwise length of the area where the embossment is formed is equivalent to or greater than the roller widths of the pickup roller and separating roller. Therefore, an adequate contact area is provided between the sheet-like object and the pickup roller and separating roller. This reduces the possibility of a no-load feed and a double feed caused by poor contact with the rollers.

### Brief Description of Drawings

FIG. 1A is a schematic front view illustrating a configuration of envelope paper that is a sheet-like object according to an embodiment of the present invention;
FIG. 1B is a schematic rear view illustrating the configuration of the envelope paper;
FIGS. 2A and 2B are diagrams illustrating an example of an embossment formation area set on the envelope paper;
FIG. 3 is a diagram illustrating conditions for the width of the embossment formation area set on the envelope paper;
FIG. 4 is a diagram illustrating conditions for the paper feed direction length of the embossment formation area set on the envelope paper;
FIG. 5 is a diagram illustrating an exemplary shape of an embossment;
FIG. 6A is a side view of windowed envelope paper according to the embodiment that is stacked on a paper feed table;
FIG. 6B is a paper feed direction rear view of the windowed envelope paper according to the embodiment that is stacked on the paper feed table; and
FIG. 7 is a diagram illustrating conventional envelope paper stacked on a paper feed table.

### {Description of Embodiments}

An embodiment of the present invention will now be described in detail with reference to the accompanying drawings. It should be noted, however, that the present invention is not limited to the embodiment described below. For example, various feasible alternative embodiments, examples, and operation technologies may be contemplated by those skilled in the art without departing from the scope of the present invention.

A sheet-like object according to an embodiment of the present invention is a sheet-like medium, such as plain paper, coated paper, envelope paper, and postcards. The material and size (definite form or indefinite form) of the sheet-like object are not specifically limited. The following description of the embodiment assumes that windowed envelope paper S (or simply referred to as the "envelope paper S") handled by a sealed-letter preparation system is used as an example of the sheet-like object.

In the present embodiment, which is described below, the "paper feed direction" is a direction in which the sheet-like object is transported for paper feed, and is equal to a long-side direction (up-down direction or longitudinal direction) when the windowed envelope paper S is viewed from above. Further, the "paper width direction" is a direction orthogonal to the paper feed direction, and is equal to a short-side direction (left-right direction or transverse direction) when the windowed envelope paper S is viewed from above.

Moreover, the "thickness change portion S1" is a portion that is different in thickness from the other portion of the same sheet surface of the sheet-like object. The windowed envelope paper S is configured so that transparent film Sc is attached to cover an opening Sb in a window Sa. Thus, the film-attached surface (rear surface) of the window Sa of the envelope paper S is thicker than the other portion of the same sheet surface by film thickness. Accordingly, the thickness change portion S1 is a portion of the windowed envelope paper S where the window Sa is formed.

The thickness change portion S1 is not limited to a portion of the sheet-like object where the thickness of the sheet surface is increased. When, for example, the opening Sb having a predetermined shape is formed in the sheet surface, a portion having the opening is thinner than the other portion. A portion affected by such a sheet surface thickness change is entirely included in the thickness change portion S1. Further, the thickness change portion S1 is not limited to the window Sa of the windowed envelope paper S according to the present embodiment. The thickness change portion S1 may be various other portions, such as a portion having surface irregularities due to an engraved sheet surface, a portion where an address or name seal is attached, and a predetermined cut or opening, for example, in a message card.

### Overview of Sealed-Letter Preparation System

The following first describes an outline configuration of a sealed-letter preparation system for preparing a sealed letter by using the windowed envelope paper S, which is the sheet-like object according to the present embodiment.

An existing system configuration developed by the inventors of the present invention is used as an example in order to describe the sealed-letter preparation system. However, the present invention is not limited to such a system configuration.

The sealed-letter preparation system that uses the envelope paper S as the sheet-like object according to the present embodiment includes a printing apparatus and an enclosing/sealing apparatus. The printing apparatus performs a predetermined printing process on paper serving as contents and the envelope paper S. The enclosing/sealing apparatus prepares a sealed letter by folding the contents and the envelope paper S, which are printed in a predetermined manner by the printing apparatus, enclosing the contents by wrapping them in the envelope paper S, and sealing the envelope paper S.

The printing apparatus performs the predetermined printing process on the envelope paper S and the paper serving as the contents, and delivers them to the subsequently disposed enclosing/sealing apparatus.

The printing apparatus includes a paper feeder and a printer. The paper feeder includes an internal paper feed unit and an external paper feed unit. The internal paper feed unit includes multiple paper feed cassettes. The paper feed cassettes accommodate multiple documents in sheet form, which serve as the contents. The external paper feed unit includes a paper feed table on which many sheets of the envelope paper S are stacked. The envelope paper S is used to form an envelope. The printer performs a predetermined printing process on various sheets of paper fed from the paper feeder. The printing process is predetermined in accordance with a job description. The printing apparatus performs the predetermined printing process on the paper serving as the contents and on the envelope paper S, which are fed at a predetermined timing in accordance with a sealed-letter preparation job description, and transports the printed paper and envelope paper S to the subsequently disposed enclosing/sealing apparatus.

The enclosing/sealing apparatus folds, as needed, the envelope paper S and the paper serving as the contents, encloses the contents in the envelope by wrapping the contents in the envelope paper S, and seals the envelope to prepare a sealed letter.

The enclosing/sealing apparatus not only folds the paper forwarded from the printing device as needed to form the contents while transporting the paper, but also folds the envelope paper S as needed to form an envelope while transporting the envelope paper S. Next, the enclosing/sealing apparatus converges the envelope paper S and the contents, forms an unsealed envelope by wrapping the contents in the envelope paper S, activates a remoistening adhesive Se coming into contact with a flap Sd by applying water to the remoistening adhesive Se, and performs a sealing process. The flap Sd, the remoistening adhesive Se, and a pressure-sensitive adhesive Sf on lateral edges of the envelope paper are then glued together to seal the envelope. The sealed letter is now prepared.

### Configuration of Windowed Envelope Paper

A configuration of the windowed envelope paper S will now be described.

The envelope paper S according to the present embodiment is tri-fold paper that is formed into the shape of an envelope by making two folds at predetermined folding positions. However, the number of folds for forming an envelope is not specifically limited. For example, double-fold paper to be folded at one time may be used as the envelope paper S.

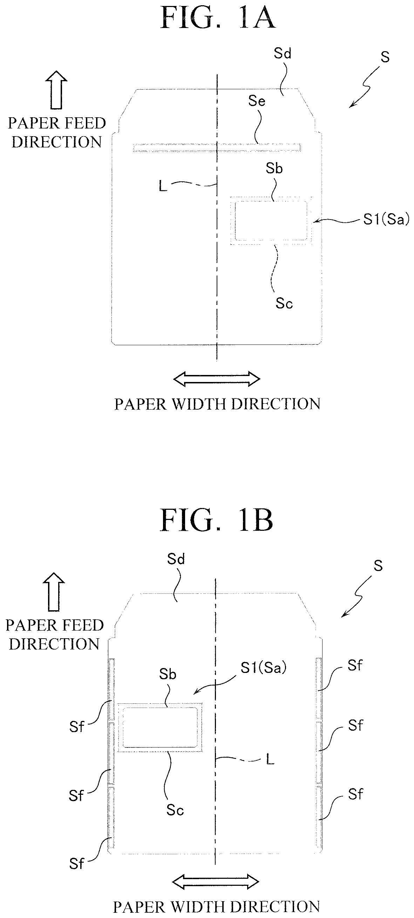

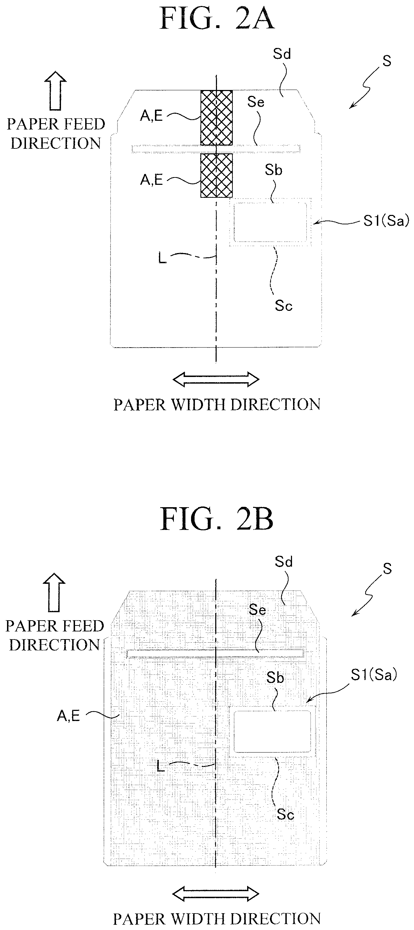

As illustrated in FIGS. 1A and 2B, the envelope paper S is placed on an external paper feed table of the paper feeder in the printing apparatus in such a manner that the flap Sd is positioned toward the leading end in the paper feed direction.

As illustrated in FIG. 1A, the remoistening adhesive Se (a normally dry portion coated with glue that becomes adhesive when wetted with water) is applied to the vicinity of a folding area for forming the flap Sd of the surface of the envelope paper S. The applied remoistening adhesive Se has a predetermined length in the paper width direction. The portion to which the remoistening adhesive Se is applied has such an area as to provide an adequate adhesion force for attaching the flap Sd to the envelope formed of the envelope paper S and preventing the flap Sd from being peeled off during transport.

Further, as illustrated in FIG. 1B, the pressure-sensitive adhesive Sf (contact bonding adhesive) is applied to opposing edges of the rear surface of the envelope paper S. When the sealing process is performed by a sealer in the enclosing/sealing apparatus, the opposing edges are glued together by allowing a nip transport to apply a predetermined pressure to the pressure-sensitive adhesive Sf. The widths and positions of portions to which the pressure-sensitive adhesive Sf is applied are predetermined depending on how the envelope paper S is folded. In the example of FIG. 1B, the pressure-sensitive adhesive Sf is substantially applied to the entirety of the opposing edges of the envelope paper S except for a folding position so that the shape of an envelope is formed by making two folds.

Moreover, as illustrated in FIGS. 1A and 1B, the window Sa is formed in the envelope paper S. The window Sa is configured so that information printed on or seal-attached to a predetermined portion of the contents (e.g., information about a recipient (postal code, name, and address or location), information about a sender (postal code, name, address or location, etc.), and identification information about the recipient and sender (one-dimensional code (barcode) and two-dimensional code (QR code (registered trademark) and SP code), and management number) can be confirmed without opening the envelope.

The window Sa is created by making the opening Sb having a predetermined size in the envelope paper S and attaching the transparent film Sc to cover the opening Sb from the rear surface of the envelope paper S. The window Sa is formed so that it is positioned on the front surface of the envelope when the envelope paper S is folded into an envelope shape. The width, length, and forming position of the window Sa are set as appropriate depending on the size and use of the envelope to be prepared.

The window Sa of the windowed envelope paper S according to the present embodiment produces a thickness difference because the thickness of the other portion of the paper surface (sheet surface) on the rear side of the envelope paper S is different from the thickness of the transparent film Sc attached to cover the window Sa. Thus, the window Sa is the thickness change portion S1 of the envelope paper S.

Further, an embossment E having convexes, which are equal in height to or higher than the thickness change portion S1, is formed on either or both surfaces of the envelope paper S. The embossment E is formed in an embossment formation area A. The embossment formation area A is a left-right symmetric widthwise area including the centerline L of the envelope paper S in the paper feed direction (transport direction), and is set inward over a predetermined length from the flap Sd, which is the leading end in the paper feed direction.

### Embossment Formation Area

The following describes the embossment formation area A formed on the windowed envelope paper S, which is the sheet-like object according to an embodiment of the present invention.

As mentioned earlier, the embossment formation area A is a left-right symmetric area including the centerline L of the envelope paper S and set inward over a predetermined length from the flap Sd. For example, the embossment formation area A is set to be an area that is left-right symmetric in the paper width direction including the center line L and formed from the leading end of the flap Sd on the surface of the envelope paper S to the front end of the window Sa, as illustrated in FIG. 2A, or set to be the entire area of the front surface of the envelope paper S excluding the window Sa and the pressure-sensitive adhesive Sf, as illustrated in FIG. 2B.

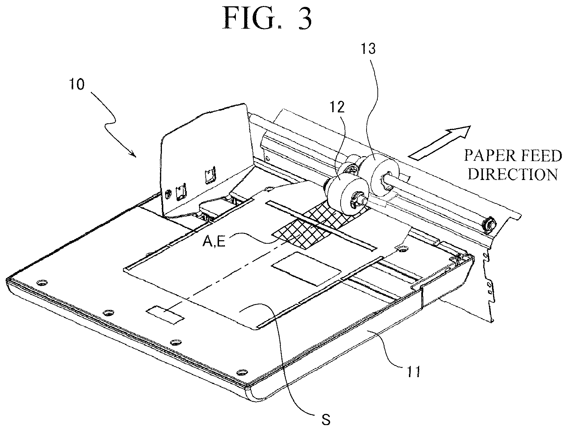

Meanwhile, as illustrated in FIG. 3, a common paper feed apparatus 10 mounted, for example, in a printing apparatus includes a primary paper feed mechanism that includes a pickup roller 12 and a separating roller 13. The pickup roller 12 pays out the envelope paper S stacked on a paper feed table 11, one sheet at a time. When two or more sheets of the envelope paper S are simultaneously paid out by the pickup roller 12, the separating roller 13 allows only the uppermost sheet of the envelope paper S to be fed in the paper feed direction. A resist roller pair 14, which forms a secondary paper feed mechanism, then deflects the envelope paper S by a predetermined deflection amount to provide skew correction, and transports the envelope paper S to a subsequently disposed printer at a predetermined timing. The envelope paper S paid out by the pickup roller 12 is then transported along the centerline L while one central portion of the envelope paper S is retained by the separating roller 13 as illustrated in FIG. 3.

When the paper feed apparatus 10 transports the envelope paper S while retaining one central portion of the envelope paper S as described above, the envelope paper S may move in a left-right direction (paper width direction) while allowing the pickup roller 12 and the separating roller 13 to act as a fulcrum. When the envelope paper S comes into contact with the resist roller pair 14 and exhibits a predetermined amount of deflection, the skew of the envelope paper S is properly corrected.

Consequently, it is preferable that the widthwise length of the embossment formation area A set on the envelope paper S be set to be equivalent to or greater than the roller surface widths of the pickup roller 12 and separating roller 13 as indicated in FIG. 3 in consideration of the contact areas with the pickup roller 12 and separating roller 13.

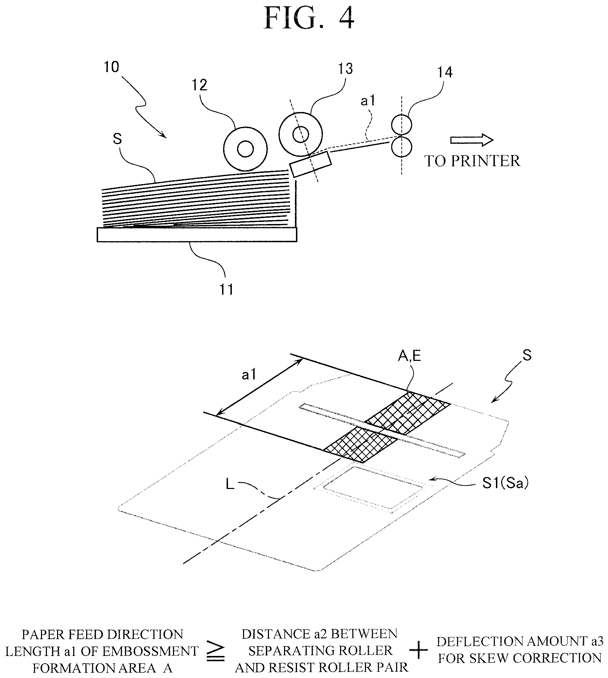

Further, it is preferable that the paper feed direction length a1 of the embossment formation area A be set to be equal to or greater than a value obtained by adding the amount a3 of deflection provided by the resist roller pair 14 to at least the distance a2 between the separating roller 13 and the resist roller pair 14, as indicated in FIG. 4, in order to transport the envelope paper S from the primary paper feed mechanism to the secondary paper feed mechanism without causing a no-load feed or a double feed. The amount a3 of deflection provided by the resist roller pair 14 may be set as appropriate depending on the paper quality, shape, and paper feed conditions of the envelope paper S.

When the widthwise length and paper feed direction length of the embossment formation area A are set under the abovementioned conditions, only the uppermost sheet of the envelope paper S stacked on the paper feed table 11 can be transported one sheet at a time. This enhances the effect of preventing a no-load feed and a double feed from being caused by poor contact with the pickup roller 12 and separating roller 13.

In order to avoid degradation in the adhesion performance of the remoistening adhesive and pressure-sensitive adhesive during the sealing process, the embossment formation area A should preferably be set as indicated in FIGS. 2A and 2B so that the embossment E is not formed in areas where the adhesives (remoistening adhesive Se and pressure-sensitive adhesive Sf) are applied. However, this does not apply to cases where the shape of the embossment E does not significantly affect the sealing process.

### Shape of Embossment

The shape of the embossment E formed in the embossment formation area A will now be described.

The embossment E to be formed on the windowed envelope paper S, which is the sheet-like object according to an embodiment of the present invention, should preferably be shaped so that when the envelope paper S is transported in the paper feed direction, little friction occurs between the rear surface of the envelope paper S to be transported and the front surface of the envelope paper S positioned directly below the envelope paper S to be transported.

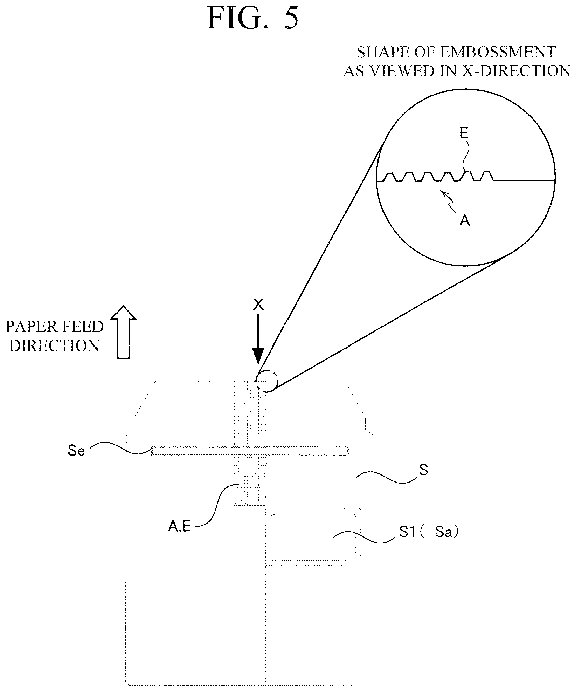

As illustrated, for example, in FIG. 5, the shape of the embossment E satisfying the above conditions is such that surface irregularities extended in the paper feed direction when the embossment E is viewed in the X-direction (in a direction opposite to the paper feed direction) are continuously formed in the paper width direction. That is to say, the form of the surface irregularities on an end face of the embossment whose longitudinal direction is the paper feed direction indicated by a hollow arrow in FIG. 5 is observed as a waveform that is continuous in the paper width direction when the embossment E is viewed in the X-direction (in a direction opposite to the paper feed direction). Further, although not illustrated, if an employed pattern causes the shapes of surface irregularities to partly overlap with each other, the surface irregularities of the embossment E formed on the contact surfaces (front and rear surfaces) of upper envelope paper S and lower envelope paper S should be positioned so as to minimize such an overlap (that is, the positions of concaves and convexes of the embossment E on the upper envelope paper S should be different from those on the lower envelope paper S) when the envelope paper S is stacked.

When the embossment E is to be formed on the front surface of the envelope paper S, the embossment E should preferably be shaped to satisfy the above conditions while artistically shaping the convexes (or concaves), for example, into the form of a star or a flower because the shape of the embossment E is exposed to view.

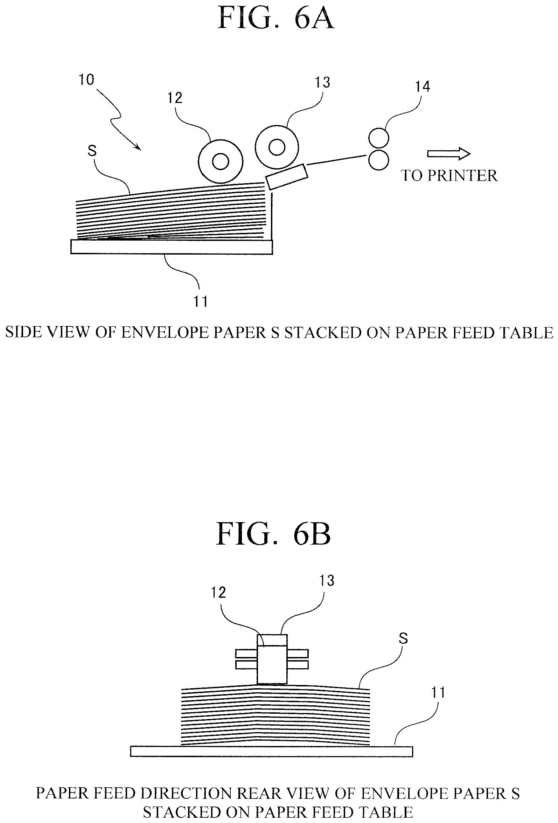

When many sheets of the envelope paper S prepared by forming the embossment E in the embossment formation area A shown in FIG. 2A are stacked on the paper feed table 11 of the printing apparatus in a sealed-letter preparation system, the envelope paper S is tilted in an unprecedented manner as illustrated in FIGS. 6A and 6b so that the paper surface at the center of the envelope paper S is made substantially horizontal so as to come into contact with the roller surfaces of the pickup roller 12 and separating roller 13.

The reason is that the paper surface thickness difference brought about by the thickness of the window Sa is offset by the embossment E that is formed in the embossment formation area A and provided with convexes equal in height to or higher than the thickness of the transparent film Sc attached to the window Sa, which is the thickness change portion S1 formed on the envelope paper S.

Further, many sheets of the envelope paper S can be stacked on the paper feed table in a substantially horizontal manner because the tilt of the stack is suppressed by the embossment E that is formed in the embossment formation area A and provided with convexes equal in height to or higher than the thickness of the transparent film Sc attached to the window Sa.

As described above, the envelope paper S, which is the abovementioned sheet-like object, is configured by forming the embossment E, which has convexes equal in height to or higher than the thickness of the transparent film Sc attached to the window Sa serving as the thickness change portion S1, in the embossment formation area A, which is formed on at least one surface of the envelope paper S, left-right symmetric area including the centerline L in the paper feed direction (transport direction), and set inward over a predetermined length from the leading end in the paper feed direction.

Consequently, the thickness difference in the thickness change portion S1 formed on the envelope paper S is offset by the embossment E formed in the embossment formation area A. Thus, the upper surface (particularly the surface in contact with the pickup roller 12) of the envelope paper S stacked on the paper feed table 11 is made substantially horizontal. This prevents a no-load feed and a double feed from being caused by poor contact with the roller surface of the pickup roller 12.

Further, in order to properly transport the envelope paper S from the primary paper feed mechanism to the secondary paper feed mechanism, the paper feed direction length a1 of the embossment formation area A is set to be equal to or greater than a value obtained by adding the amount a3 of deflection provided by the resist roller pair 14 to at least the distance a2 between the separating roller 13 and the resist roller pair 14. Therefore, only the uppermost sheet of the envelope paper S can be transported one sheet at a time. This prevents a no-load feed and a double feed from being caused by poor contact with the pickup roller 12 and the separating roller 13.

Moreover, many sheets of the envelope paper S can be stacked on the paper feed table 11 in a substantially horizontal manner because the tilt of the stack is suppressed by the embossment E that is formed in the embossment formation area A and provided with convexes equal in height to or higher than the thickness of the transparent film Sc attached to the window Sa. Therefore, even when a job of preparing a large number of sealed letters is executed, the windowed envelope paper S needs to be replenished at fewer frequent intervals.

### Alternative Embodiments

The present invention is not limited to the foregoing embodiment. The present invention may alternatively be implemented by making appropriate changes as described below depending, for example, on the usage environment. Further, the following alternative embodiments may be combined as desired without departing from the spirit of the present invention.

In the foregoing embodiment, the embossment E formed in the embossment formation area A set on at least one surface of the windowed envelope paper S, which is the sheet-like object, is equal in height to or higher than the thickness of the transparent film Sc or the thickness of the window Sa, which is the thickness change portion S1. However, an alternative configuration may be employed so as to achieve a smooth paper feed process by preventing the sheet-like object from being tilted by the thickness change portion S1 of the sheet-like object when many sheets of the sheet-like object are stacked.

Consequently, an alternative is, for example, to form the embossment E in the embossment formation area A and tilt the paper feed table 11 of the paper feed apparatus 10 as needed in a predetermined direction. Another alternative is, for example, to employ multiple paper feed tables 11 that are adjacent to each other and arranged in the paper width direction, incorporate a driver capable of selectively raising and lowering the multiple paper feed tables, and adjust the heights of the multiple paper feed tables 11 as needed to bring the center of the envelope paper S stacked on the multiple paper feed tables into proper contact with the roller surfaces of the pickup roller 12 and separating roller 13.

### Description of Reference Signs

S... sheet-like object
S1... thickness change portion
Sa... window
Sb... opening
Sc... transparent film
Sd... flap
Se... remoistening adhesive
Sf... pressure-sensitive adhesive
10... paper feed apparatus
11... paper feed table
12... pickup roller (primary paper feed mechanism)
13... separating roller (primary paper feed mechanism)
14... resist roller pair (secondary paper feed mechanism)

## Claims

1. A sheet-like object comprising a thickness change portion having a partially different thickness on one side of the centerline of a sheet surface that is parallel to a paper feed direction,
wherein an embossment is formed in an area that is left-right symmetric with respect to the centerline including the centerline.

2. The sheet-like object according to claim 1,
wherein the sheet-like object is transported by a paper feeder that includes a separating roller that receives the sheet-like object delivered by a pickup roller, separates one sheet of the sheet-like object at a time, and transports the separated sheet in a transport direction, and a resist roller pair that comes into contact with a leading end of the sheet-like object separated by the separating roller and deflects the leading end by a predetermined deflection amount to provide skew correction, and
wherein the length of the area in a direction parallel to the centerline is determined by adding the deflection amount to at least the distance between the separating roller and the resist roller pair.

3. The sheet-like object according to claim 2, wherein the length of the area in the width direction orthogonal to the centerline is equivalent to or greater than the roller width of the pickup roller or of the separating roller.

4. The sheet-like object according to any preceding claim, wherein the object is plain paper, coated paper, envelope paper or a postcard.

5. The sheet-like object according to any preceding claim, wherein the object is windowed envelope paper.
